# EUROPÄISCHE PATENTSCHRIFT

(11) **EP 3 156 688 B1**
(45) Veröffentlichungstag und Bekanntmachung des Hinweises auf die Patenterteilung: **03.06.2020**
(21) Anmeldenummer: 16193382.5
(22) Anmeldetag: 11.10.2016
(51) Int. Cl.: F16F 15/14

(54) **TORSIONSSCHWINGUNGSDÄMPFER FÜR EINE KURBELWELLE**
TORSIONAL VIBRATION DAMPER FOR CRANKSHAFT
AMORTISSEUR DE VIBRATIONS TORSIONNELLES POUR UN VILEBREQUIN

(30) Priorität: 12.10.2015 DE 102015117355
(43) Veröffentlichungstag der Anmeldung: 19.04.2017
(73) Patentinhaber: Vibracoustic AG, 64293 Darmstadt (DE); Volkswagen AG, 38440 Wolfsburg (DE)
(72) Erfinder: Schell, Matthias, 64720 Michelstadt (DE); Quilitz, Ingo, 38486 Klötze (DE); Warnecke, Dirk, 38518 Gifhorn (DE)
(74) Vertreter: Patentanwälte Olbricht Buchhold Keulertz

(56) Entgegenhaltungen:
- DE-A1- 10 311 264
- DE-A1-102008 019 173
- US-A- 2 083 561
- US-A- 5 074 812

## Beschreibung

Die vorliegende Erfindung betrifft einen Torsionsschwingungsdämpfer für eine Kurbelwelle. Ferner betrifft die Erfindung eine Kurbelwelle mit einem derartigen Torsionsschwingungsdämpfer sowie ein Kraftfahrzeug.

Während des Betriebs eines Kraftfahrzeugmotors, insbesondere eines Verbrennungsmotors, treten Torsionsschwingungen an der Kurbelwelle auf. Die Torsionsschwingungen können zu einem Versagen der Kurbelwelle infolge eines Torsionsbruchs führen.

Zur Dämpfung dieser Schwingungen ist es bekannt, einen Torsionsschwingungsdämpfer an einem freien Ende der Kurbelwelle anzuordnen. Herkömmliche Torsionsschwingungsdämpfer weisen eine Riemenscheibe, ein Dämpfungselement und eine Nabe zum Verbinden des Torsionsschwingungsdämpfers mit dem freien Ende der Kurbelwelle auf. Die Riemenscheibe weist zumeist eine Profilierung auf, die mit einem Riementrieb koppelbar ist, um Nebenaggregate, wie beispielsweise einen Klimakompressor oder eine Lichtmaschine, anzutreiben.

Die bekannten Torsionsschwingungsdämpfer werden üblicherweise am freien Kurbelwellenende eines Verbrennungsmotors über eine Wellen-Naben-Verbindung angeflanscht, insbesondere angeschraubt. Diese Welle-Nabe-Verbindung muss neben statischer Momente des Riementriebes, die aus der Funktion des Bauteils resultierenden dynamischen Wechselmomente des Torsionsschwingungsdämpfers übertragen. Um dieses Wechselmoment zu übertragen, sind oftmals zusätzliche konstruktive Maßnahmen notwendig, wie beispielsweise die Ausgestaltung aufwendiger Anschlussflansche und/oder zusätzliche reibungserhöhende Scheiben (z.B. Diamantscheiben), um den Schraubverband im Hinblick auf die Wechselmomente zu ertüchtigen.

Darüber hinaus werden im Zuge der Hybridisierung des Antriebsstranges Nebenaggregate zunehmend elektrisch angetrieben. Derart angetriebene Nebenaggregate weisen eine höhere Flexibilität auf, da sie unabhängig vom Betriebszustand des Motors funktionsbereit sind. Zudem tragen elektrisch angetriebene Nebenaggregate zu einer Kraftstoffeinsparung bei, da sie nur bei Bedarf angetrieben werden und nicht ständig über den Riementrieb mitgedreht werden. Dadurch können Riementriebe am freien Ende der Kurbelwelle entfallen, so dass sich neue Wege für die Anordnung eines Torsionsschwingungsdämpfers an einer Kurbelwelle ergeben können.

So geht aus DE 103 25 827 A1 eine Kurbelwelle hervor, in deren Ausgleichsgewicht eine Nut eingebracht ist, in die ein Schwingungsisoliergummi und eine Schwungmasse montiert sind. Wenn sich das Drehmoment der Kurbelwelle durch die periodischen Explosionen im Verbrennungsmotor verändert, wird die Schwungmasse um die Längsachse der Kurbelwelle gedreht, so dass über den Schwingungsisoliergummi eine Dämpfungswirkung erzielt wird. Nachteilig hierbei ist, dass die Dämpfungswirkung des Torsionsschwingungsdämpfers gering ist, da die Schwungmasse aufgrund des im Ausgleichgewicht zur Verfügung stehenden Bauraums vergleichsweise klein ausgebildet ist.

Zur Umgehung dieses Nachteils geht aus DE 10 2008 053 801 A1 eine Kurbelwelle mit einem Torsionsschwingungsdämpfer hervor, der eine asymmetrische Schwungmasse und ein Dämpfungselement aufweist, wobei die Schwungmasse über das Dämpfungselement derart drehbar an der Kurbelwelle gelagert ist, dass eine Drehachse der Schwungmasse in einem Abstand zu einer Drehachse der Kurbelwelle angeordnet ist. Durch die asymmetrische Ausgestaltung der Schwungmasse ergeben sich bauartbedingte Nachteile für die Funktion des Dämpfers.

DE 10 2008 019 173 A1 offenbart einen Drehschwingungsdämpfer für eine Kurbelwelle bestehend aus einem Trägerelement, einem Elastomerelement und einer Dämpfermasse, wobei die drei Teile miteinander verpresst sind. Das Trägerelement weist eine erste Durchbrechung und eine zweite Durchbrechung auf, wobei die Durchbrechungen eine ringsegmentartige Form beschreiben, wodurch im Ergebnis das Trägerelement einen Außenring, einen Innenring, eine Speiche sowie eine Massenhäufung aufweist. Die Massenhäufung kann an dem Trägerelement als Gegengewicht bezeichnet werden, welches dazu dient, einen Massenausgleich an der Kurbelwelle zu bewirken.

DE 103 11 264 A1 offenbart einen Drehschwingungsdämpfer an einem Antriebsstrang. An eine Kurbelwelle einer Brennkraftmaschine ist eine Nabe des Drehschwingungsdämpfers über eine Flanschverbindung angeschraubt. Um die Nabe ist als Dämpfungsfeder ein ringförmiger Elastomerkörper und eine ebenfalls ringförmige Tilgermasse angeordnet, die beispielsweise durch Vulkanisation fest miteinander verbunden sind.

US 5 074 812 A offenbart einen Drehschwingungsdämpfer für einen Schiffsmotor der über eine Kerbverzahnung an einer Abtriebswelle befestigt ist. Der Drehschwingungsdämpfer umfasst ein Nabenelement, einen Elastomerring und einen Trägheitsring. Um Schmiermittel aufzunehmen weist der Elastomerring eine Nut auf, welche eine Wand bildet und als Damm fungiert.

US 2 083 561 A offenbart einen Drehschwingungsdämpfer für eine Abtriebswelle. An einem Ende der Abtriebswelle ist der Schwingungsdämpfer auf die Abtriebswelle geschraubt. Der Schwingungsdämpfer umfasst eine Trägerelement und ein Trägheitselement, die durch eine anvulkanisierte Elastomerschicht miteinander verbunden sind.

Der Erfindung liegt die **Aufgabe** zugrunde, einen Torsionsschwingungsdämpfer zu schaffen, der zu einem verbesserten schwingungstechnischen Verhalten einer Kurbelwelle führt und zu einer verbesserten Funktion des Dämpfers.

Zur **Lösung** dieser Aufgabe wird ein Torsionsschwingungsdämpfer mit den Merkmalen des Anspruchs 1, eine Kurbelwelle mit den Merkmalen des Anspruchs 6 sowie ein Kraftfahrzeug mit den Merkmalen des Anspruchs 7 vorgeschlagen.

Vorteilhafte Ausgestaltungen des Torsionsschwingungsdämpfers sind Gegenstand der abhängigen Ansprüche.

Der Torsionsschwingungsdämpfer für eine Kurbelwelle weist eine ringförmig ausgebildete Schwungmasse, eine Nabe, mittels der der Torsionsschwingungsdämpfer mit einer Kurbelwange der Kurbelwelle verbindbar ist, und ein Dämpfungselement auf, wobei die Schwungmasse zumindest einen Abschnitt der Kurbelwelle umgibt, und wobei die Schwungmasse über das Dämpfungselement rotierbar mit der Kurbelwelle verbindbar ist. Der Torsionsschwingungsdämpfer ist derart ausgebildet, dass im verbundenen Zustand eine Drehachse der Schwungmasse konzentrisch zu einer Drehachse der Kurbelwelle angeordnet ist. Der Torsionsschwingungsdämpfer ist auf die Kurbelwange aufpressbar. Im verbundenen Zustand des Torsionsschwingungsdämpfers mit der Kurbelwelle umgibt die Schwungmasse das Dämpfungselement, die Nabe und die Kurbelwange der Kurbelwelle außenumfangsseitig.

Die Anflanschung des Torsionsschwingungsdämpfers auf einem Abschnitt der Kurbelwelle ermöglicht es, die am freien Kurbelwellenende befindlichen trägen Massen deutlich zu reduzieren. Dies führt zu einem verbesserten schwingungstechnischen Verhalten der Kurbelwelle. Zudem kann die Kurbelwelle reduziert, insbesondere verkürzt, werden. Darüber hinaus führt die Anflanschung des Torsionsschwingungsdämpfers auf einem Abschnitt der Kurbelwelle zu einer deutlichen Entlastung der als Welle-Nabe-Verbindung ausgeführten Schraubverbindung, mittels der die Riemenscheibe an der Kurbelwelle befestigt ist. Dadurch kann diese Schraubverbindung einfacher ausgeführt werden. Bevorzugt umgibt die Schwungmasse die Kurbelwelle, sodass ein großer Bauraum für die Schwungmasse zur Verfügung steht. Dadurch kann die Schwungmasse bei entsprechenden Anwendungen entsprechend groß ausgebildet werden.

Vorteilhaft ist der Torsionsschwingungsdämpfer mit einer Fläche einer Kurbelwange der Kurbelwelle verbindbar. Bevorzugt ist der Torsionsschwingungsdämpfer mit einer ersten Kurbelwange, insbesondere einer Fläche der ersten Kurbelwange, verbindbar.

Vorteilhaft ist der Torsionsschwingungsdämpfer ferner stoffschlüssig mit der Kurbelwelle, insbesondere einer Kurbelwange, verbindbar. Ferner kann der Torsionsschwingungsdämpfer mit der Kurbelwelle, insbesondere einer Kurbelwange, verschweißt und/oder verklebt sein.

Vorteilhaft ist die Nabe als Innenring ausgebildet, mittels dem der Torsionsschwingungsdämpfer mit der Kurbelwelle, insbesondere einer Kurbelwange, verbindbar, insbesondere aufpressbar, ist. Vorteilhaft umgibt die Schwungmasse die Nabe, insbesondere den Innenring, wobei das Dämpfungselement zwischen der Schwungmasse und der Nabe, insbesondere dem Innenring, angeordnet ist und die beiden drehelastisch miteinander verbindet.

In einer vorteilhaften Ausgestaltung ist das Dämpfungselement stoffschlüssig und/oder kraftschlüssig mit der Schwungmasse und/oder der Nabe verbunden. Bei einer kraftschlüssigen Verbindung ist das Dämpfungselement zwischen der Schwungmasse und der Nabe eingepresst. Bei einer stoffschlüssigen Verbindung kann das Dämpfungselement an die Schwungmasse und die Nabe angehaftet werden.

In einer vorteilhaften Ausgestaltung ist das Dämpfungselement als ringförmiger Elastomerkörper ausgebildet. Ein als Elastomerkörper ausgebildetes Dämpfungselement weist gute Dämpfungseigenschaften auf und ist zudem kostengünstig in der Herstellung. Ferner kann das Dämpfungselement als ein Federelement oder als Viskodämpfer ausgebildet sein.

Erfindungsgemäß umgibt die Schwungmasse das Dämpfungselement, insbesondere den ringförmigen Elastomerkörper, die Nabe und die Kurbelwelle, insbesondere eine Kurbelwange, außenumfangsseitig. Dadurch kann die Masse der Schwungmasse ausreichend groß dimensioniert werden. Zudem wird eine ausreichend große Masse für eine Tilger- und/oder Dämpfungswirkung zur Verfügung gestellt.

Die Schwungmasse kann aus Metall oder einem Gusswerkstoff hergestellt sein. Dadurch weist die Schwungmasse zur Dämpfung beziehungsweise Tilgung der Torsionsschwingungen eine ausreichend große Masse auf und ist zudem ist kostengünstig in der Herstellung.

Ferner betrifft die Erfindung eine Kurbelwelle für ein Kraftfahrzeug mit wenigstens einem Torsionsschwingungsdämpfer. Bevorzugt weist die Kurbelwelle wenigstens eine exzentrische Kurbelwange auf, wobei der Torsionsschwingungsdämpfer mit der Kurbelwange, insbesondere einer Fläche der Kurbelwange, verbunden ist. Der wenigstens eine Torsionsschwingungsdämpfer dämpft beziehungsweise tilgt die während des Betriebs von einem Verbrennungsmotor auf die Kurbelwelle wirkenden Torsionsschwingungen. Die Anflanschung des Torsionsschwingdämpfers auf einem Abschnitt der Kurbelwelle, insbesondere auf der Kurbelwange, ermöglicht es, die am freien Kurbelwellenende befindlichen trägen Massen deutlich zu reduzieren. Dies führt zu einem verbesserten schwingungstechnischen Verhalten der Kurbelwelle. Zudem kann die Kurbelwelle reduziert, insbesondere verkürzt, werden. Darüber hinaus führt die Anflanschung des Torsionsschwingungsdämpfers auf einem Abschnitt der Kurbelwelle, insbesondere auf der Kurbelwange, zu einer deutlichen Entlastung der als Welle-Nabe-Verbindung ausgeführten Schraubverbindung, mittels der die Riemenscheibe an der Kurbelwelle befestigt ist. Dadurch kann diese Schraubverbindung einfacher ausgeführt werden. Bevorzugt ist der Torsionsschwingungsdämpfer mit der ersten Kurbelwange der Kurbelwelle verbunden. Weiterhin bevorzugt ist der wenigstens eine Torsionsschwingungsdämpfer derart mit der Kurbelwelle, insbesondere einer Kurbelwange, verbunden, dass der Torsionsschwingungsdämpfer innerhalb eines Kurbelgehäuses angeordnet ist. Vorteilhaft ist der Torsionsschwingungsdämpfer mit einer Fläche der Kurbelwelle, insbesondere einer Fläche einer Kurbelwange, stoffschlüssig und/oder kraftschlüssig verbunden.

Bevorzugt ist die Kurbelwelle drehbar in einem Kurbelgehäuse gelagert, wobei wenigstens eine Kurbelwange und ein Kurbelwellenrad innerhalb des Gehäuses angeordnet sind. Weiterhin vorteilhaft weist die Kurbelwelle mehrere exzentrische Kurbelwangen auf, die innerhalb des Gehäuses angeordnet sind. Bevorzugt ist der Torsionsschwingungsdämpfer innerhalb des Gehäuses auf der ersten Kurbelwellenwange montiert.

Ferner betrifft die Erfindung ein Kraftfahrzeug mit einer Kurbelwelle.

Nachfolgend werden der Torsionsschwingungsdämpfer und die Kurbelwelle anhand von Ausführungsbeispielen, die in den Figuren schematisch dargestellt sind, näher erläutert. Hierbei zeigen:
- Fig. 1: eine perspektivische Darstellung einer Kurbelwelle ohne Torsionsschwingungsdämpfer;
- Fig. 2: eine perspektivische Darstellung eines Torsionsschwingungsdämpfers;
- Fig. 3: eine perspektivische Darstellung der Kurbelwelle mit einem Torsionsschwingungsdämpfer; und
- Fig. 4: eine perspektivische Darstellung eines Ausschnitts eines Längsschnitts einer in einem Kurbelgehäuse angeordneten Kurbelwelle mit einem auf der ersten Kurbelwange befestigten Torsionsschwingungsdämpfer.

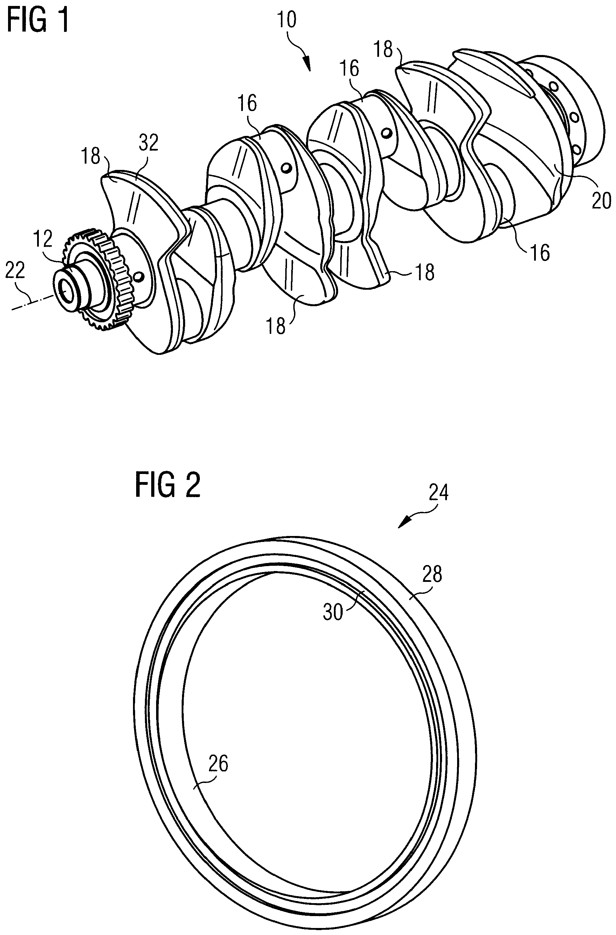

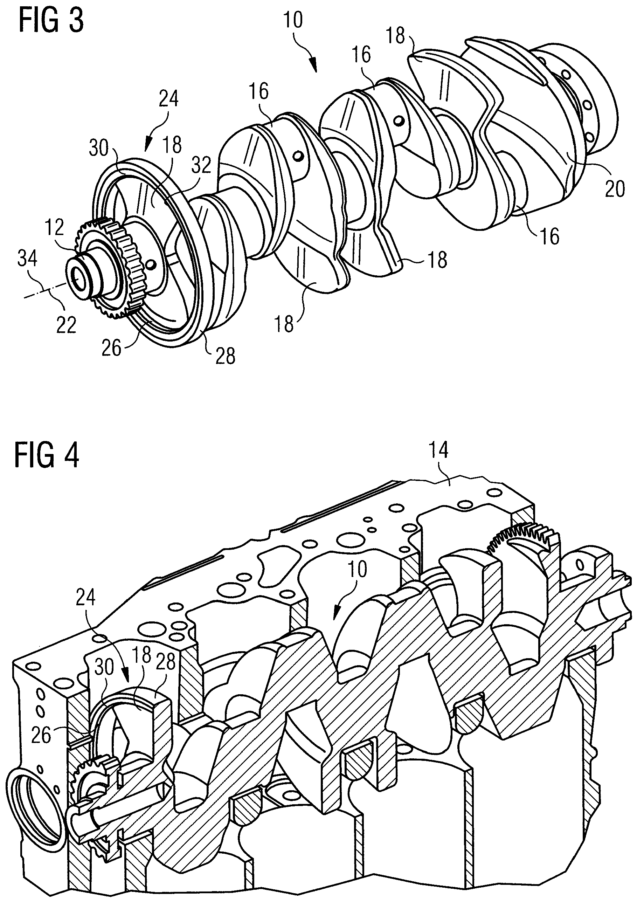

In Fig. 1 ist eine Kurbelwelle 10 zur Umwandlung der horizontalen Bewegung von nicht dargestellten Kolben eines Verbrennungsmotors in eine Drehbewegung gezeigt. Die Kurbelwelle 10 weist Wellenzapfen 12, mehrere Hubzapfen 16, an denen die Kolben über nicht dargestellte Kolbenstangen befestigt sind, mehrere Kurbelwangen 18 und ein Kurbelwellenrad 20 auf. Die Kurbelwelle 10 ist über die Wellenzapfen 12 um eine Drehachse 22 drehbar in dem in Fig. 4 gezeigte Kurbelgehäuse 14 gelagert. Die Kurbelwangen 18 sind bevorzugt asymmetrisch ausgebildet.

Der in Fig. 2 gezeigte Torsionsschwingungsdämpfer 24 weist einen als Nabe ausgebildeten Innenring 26, eine Schwungmasse 28 und ein Dämpfungselement 30 auf. Die Schwungmasse 28 ist ringförmig ausgebildet und umgibt den Innenring 26 mit radialem Abstand. Zwischen der Schwungmasse 28 und dem Innenring 26 ist das Dämpfungselement 30 angeordnet. Das Dämpfungselement 26 ist vorliegend als ringförmiger Elastomerkörper ausgebildet und kann stoffschlüssig und/oder kraftschlüssig mit der Schwungmasse 28 und/oder dem Innenring 26 angeordnet sein. Über den Innenring 26 ist der Torsionsschwingungsdämpfer 24 mit der Kurbelwelle 10 verbunden.

In Fig. 3 ist die Kurbelwelle 10 mit einem daran montierten Torsionsschwingungsdämpfer 24 gezeigt. Der Torsionsschwingungsdämpfer 24 ist an der ersten Kurbelwange 18 formschlüssig befestigt, insbesondere aufgepresst. Die Verbindung des Torsionsschwingungsdämpfers 24 an der ersten Kurbelwange 18 erfolgt über eine an der Kurbelwange 18 ausgebildete Montageflächen 32, auf der der Torsionsschwingungsdämpfer 24, insbesondere der Innenring 26, aufgepresst ist. Die Kurbelwange 18 kann zudem einen radial abragenden Vorsprung aufweisen, der als Anschlag während des Aufpressens dient.

Während des Betriebs des Verbrennungsmotors unterliegt die Kurbelwelle 10 Torsionsschwingungen, welche die Schwungmasse 28 aufgrund ihrer Rotationsträgheit um die Drehachse 34 schwingen lässt. Durch die Schwingung der Schwungmasse 38 wird das Dämpfungselement 30 ebenfalls tordiert, wodurch eine Dämpfungs- bzw. Tilgungswirkung erzielt wird. Der Torsionsschwingungsdämpfer 24 ist derart ausgebildet, dass im verbundenen Zustand seine Drehachse 34 konzentrisch zu der Drehachse 22 der Kurbelwelle 10 angeordnet ist.

In Fig. 4 ist die Kurbelwelle 10 innerhalb des Kurbelgehäuses 14 gezeigt, wobei auf der ersten Kurbelwange 18 ein Torsionsschwingungsdämpfer 24 montiert ist. Der Torsionsschwingungsdämpfer 24 ist innerhalb des Gehäuses 14 angeordnet.

Die Anflanschung des Torsionsschwingungsdämpfers 24 auf einem Abschnitt der Kurbelwelle 10, insbesondere auf der Kurbelwange 18, ermöglicht es, die am freien Kurbelwellenende befindlichen trägen Massen deutlich zu reduzieren. Dies führt zu einem verbesserten schwingungstechnischen Verhalten der Kurbelwelle 10. Zudem kann die Kurbelwelle 10 reduziert, insbesondere verkürzt, werden. Darüber hinaus führt die Anflanschung des Torsionsschwingungsdämpfers 24 auf einem Abschnitt der Kurbelwelle 10, insbesondere auf der Kurbelwange 18, zu einer deutlichen Entlastung der als Welle-Nabe-Verbindung ausgeführten Schraubverbindung, mittels der die Riemenscheibe an der Kurbelwelle 10 befestigt ist. Dadurch kann diese Schraubverbindung einfacher ausgeführt werden. Durch die konzentrische Anordnung der Drehachse 32 des Torsionsschwingungsdämpfers 24 zu der Drehachse 22 der Kurbelwelle 10 wird die Schwerpunktlage der Kurbelwelle 10, insbesondere der Kurbelwange 18 oder des Kurbelwellenrads 20, verändert.

### Bezugszeichenliste

- 10: Kurbelwelle
- 12: Wellenzapfen
- 14: Kurbelgehäuse
- 16: Hubzapfen
- 18: Kurbelwangen
- 20: Kurbelwellenrad
- 22: Drehachse
- 24: Torsionsschwingungsdämpfer
- 26: Innenring
- 28: Schwungmasse
- 30: Dämpfungselement
- 32: Montagefläche

- 34: Drehachse

## Patentansprüche

1. Torsionsschwingungsdämpfer (24) für eine Kurbelwelle (10), mit einer ringförmig ausgebildeten Schwungmasse (28), einer Nabe, mittels der der Torsionsschwingungsdämpfer (24) mit einer Kurbelwange (18) der Kurbelwelle (10) verbindbar ist, und einem Dämpfungselement (30), wobei die Schwungmasse (28) zumindest einen Abschnitt der Kurbelwelle (10) umgibt, wobei die Schwungmasse (28) über das Dämpfungselement (30) rotierbar mit der Kurbelwelle (10) verbindbar ist, und wobei der Torsionsschwingungsdämpfer (24) derart ausgebildet ist, dass im verbundenen Zustand eine Drehachse (38) der Schwungmasse (28) konzentrisch zu einer Drehachse (22) der Kurbelwelle (10) angeordnet ist, **dadurch gekennzeichnet, dass** der Torsionsschwingungsdämpfer (24) auf die Kurbelwange (18) aufpressbar ist und dass im verbundenen Zustand des Torsionsschwingungsdämpfers (24) mit der Kurbelwelle (10) die Schwungmasse (28) das Dämpfungselement (30), die Nabe und die Kurbelwange (18) der Kurbelwelle (10) außenumfangsseitig umgibt.

2. Torsionsschwingungsdämpfer (24) nach Anspruch 1, **dadurch gekennzeichnet, dass** der Torsionsschwingungsdämpfer (24) stoffschlüssig mit der Kurbelwelle (10) verbindbar ist.

3. Torsionsschwingungsdämpfer (24) nach Anspruch 1 oder 2, **dadurch gekennzeichnet, dass** das Dämpfungselement (30) stoffschlüssig und/oder kraftschlüssig mit der Schwungmasse (28) und/oder der Nabe verbunden ist.

4. Torsionsschwingungsdämpfer (24) nach einem der vorhergehenden Ansprüche, **dadurch gekennzeichnet, dass** das Dämpfungselement (30) als ringförmiger Elastomerkörper ausgebildet ist.

5. Torsionsschwingungsdämpfer (24) nach einem der vorhergehenden Ansprüche, **dadurch gekennzeichnet, dass** die Schwungmasse (28) aus Metall oder einem Gusswerkstoff hergestellt ist.

6. Kurbelwelle (10) für ein Kraftfahrzeug mit wenigstens einem Torsionsschwingungsdämpfer (24) nach einem der Ansprüche 1 bis 5.

7. Kraftfahrzeug mit einer Kurbelwelle (10) nach Anspruch 6.

## Claims

1. Torsional vibration damper (24) for a crankshaft (10), having an annular flywheel mass (28), a hub by means of which the torsional vibration damper (24) is connectable to a crank web (18) of the crankshaft (10), and a damping element (30), wherein the flywheel mass (28) surrounds at least one portion of the crankshaft (10), wherein the flywheel mass (28) is rotatably connectable to the crankshaft (10) via the damping element (30), and wherein the torsional vibration damper (24) is configured such that, in the connected state, an axis of rotation (38) of the flywheel mass (28) is arranged concentrically with an axis of rotation (22) of the crankshaft (10), **characterised in that** the torsional vibration damper (24) can be pressed onto the crank web (18), and **in that**, in the connected state of the torsional vibration damper (24) with the crankshaft (10), the flywheel mass (28) surrounds the damping element (30), the hub and the crank web (18) of the crankshaft (10) on the outer circumferential side.

2. Torsion vibration damper (24) according to claim 1, **characterised in that** the torsion vibration damper (24) is materially connectable to the crankshaft (10).

3. Torsional vibration damper (24) according to claim 1 or 2, **characterised in that** the damping element (30) is connected to the flywheel mass (28) and/or the hub in a materially connectable and/or non-positive manner.

4. Torsional vibration damper (24) according to any one of the preceding claims, **characterised in that** the damping element (30) is designed as an annular elastomeric body.

5. Torsional vibration damper (24) according to any one of the preceding claims, **characterised in that** the flywheel mass (28) is made of metal or a cast material.

6. Crankshaft (10) for a motor vehicle having at least one torsional vibration damper (24) according to one of the claims 1 to 5.

7. Motor vehicle having a crankshaft (10) according to claim 6.

## Revendications

1. Amortisseur de vibrations de torsion (24) pour un vilebrequin (10), comprenant une masse d'inertie (28) réalisée sous forme annulaire, un moyeu au moyen duquel l'amortisseur de vibrations de torsion (24) peut être relié à un flasque (18) du vilebrequin (10), et un élément amortisseur (30), la masse d'inertie (28) entourant au moins une partie du vilebrequin (10), la masse d'inertie (28) pouvant être reliée au vilebrequin (10) de façon mobile en rotation par l'élément amortisseur (30), et l'amortisseur de vibrations de torsion (24) étant réalisé de telle sorte que, à l'état relié, un axe de rotation (38) de la masse d'inertie (28) est disposé concentriquement à un axe de rotation (22) du vilebrequin (10),
**caractérisé en ce que**
l'amortisseur de vibrations de torsion (24) peut être pressé sur le flasque (18), et **en ce que**
à l'état relié de l'amortisseur de vibrations de torsion (24) avec le vilebrequin (10), la masse d'inertie (28) entoure, côté périphérie extérieure, l'élément amortisseur (30), le moyeu et le flasque (18) du vilebrequin (10).

2. Amortisseur de vibrations de torsion (24) selon la revendication 1, **caractérisé en ce que**
l'amortisseur de vibrations de torsion (24) peut être relié au vilebrequin (10) par coopération de matière.

3. Amortisseur de vibrations de torsion (24) selon la revendication 1 ou 2, **caractérisé en ce que**
l'élément amortisseur (30) est relié à la masse d'inertie (28) et/ou au moyeu par coopération de matière et/ou par coopération de force.

4. Amortisseur de vibrations de torsion (24) selon l'une des revendications précédentes,
**caractérisé en ce que**
l'élément amortisseur (30) est réalisé sous forme de corps élastomère de forme annulaire.

5. Amortisseur de vibrations de torsion (24) selon l'une des revendications précédentes,
**caractérisé en ce que**
la masse d'inertie (28) est réalisée en métal ou en un matériau de fonderie.

6. Vilebrequin (10) pour un véhicule automobile, comportant au moins un amortisseur de vibrations de torsion (24) selon l'une des revendications 1 à 5.

7. Véhicule automobile comportant un vilebrequin (10) selon la revendication 6.
